Europäisches Patentamt

European Patent Office

Office européen des brevets

(11) Publication number: **0 488 533 A2**

# EUROPEAN PATENT APPLICATION

(21) Application number: **91310079.8**

(22) Date of filing: **31.10.91**

(51) Int. Cl.5: **C08F 4/649**, C08F 10/02

(30) Priority: **30.11.90 JP 330097/90**

(43) Date of publication of application:
**03.06.92 Bulletin 92/23**

(84) Designated Contracting States:
**FR GB**

(71) Applicant: **UBE INDUSTRIES, LTD.**
**12-32, Nishihonmachi 1-chome**
**Ube-shi, Yamaguchi(JP)**

(72) Inventor: **Tamura, Masanori, c/o Ube**
**Industries Ltd.**
**Chiba Laboratory, 8-1 Goi Minamikaigan**
**Ichihara-shi, Chiba(JP)**
Inventor: **Sakakibara, Yasuhisa, c/o Ube**
**Industries Ltd.**
**Chiba Laboratory, 8-1 Goi Minamikaigan**
**Ichihara-shi, Chiba(JP)**
Inventor: **Sato, Hiroshi, c/o Ube Industries Ltd.**
**Chiba Laboratory, 8-1 Goi Minamikaigan**
**Ichihara-shi, Chiba(JP)**
Inventor: **Takaoka, Toru, c/o Ube Industries**
**Ltd.**
**Chiba Petrochemical Factory, 8-1 Goi**
**Minamikaigan**
**Ichihara-shi, Chiba(JP)**

(74) Representative: **Adams, William Gordon et al**
**36 Sydenham Road**
**Croydon Surrey CR0 2EF(GB)**

(54) **Process for polymerization of ethylene.**

(57) A polymerization of ethylene or a copolymerization of ethylene with an $\alpha$-olefin with 3 or more carbon atoms is carried out, at 125°C or more under a pressure of 200 kg/cm$^2$ or more, in the presence of a catalyst comprising a catalyst solid component (A) comprising Mg, Ti and a halogen and a catalyst component (B) comprising a reaction product of an organic aluminum compound of the formula (I): $AlR_3$, wherein R is a $C_{1-8}$ alkyl group, with a hindered phenol compound.

## BACKGROUND OF THE INVENTION

### 1) Field of the Invention

The present invention relates to a process for the polymerization of ethylene. More particularly, the present invention relates to a process for the polymerization of ethylene or a mixture of ethylene with at least one $\alpha$-olefin having 3 or more carbon atoms, at a high temperature and under a high pressure.

### 2) Description of the Related Arts

In the prior arts, various processes for polymerizing ethylene or for copolymerizing ethylene and an $\alpha$-olefin having 3 or more carbon atoms in the pressure of a Ziegler catalyst at a temperature of 125°C or more under a pressure of 200 kg/cm$^2$ or more; are provided.

The catalyst usable for the ethylene polymerization under high temperature and high pressure conditions comprises a combination of a titanium-containing solid catalyst component carried on a carrier comprising titanium trichloride or a magnesium compound with a co-catalyst component comprising an organic aluminum compound, as disclosed in, for example, Japanese Unexamined Patent Publication Nos. 49-97,087, 56-18,607 and 57-190,008.

When a trialkyl aluminum is used as a co-catalyst component for the ethylene polymerization under high temperature high pressure conditions, an undesirable hydrogenation of ethylene occurs, and to avoid this hydrogenation of ethylene in the above-mentioned conventional processes, a halogen-containing organic aluminum compound, for example, diethylaluminum chloride, dibutylaluminum chloride or sesquichloroethylaluminum is employed as a co-catalyst component instead of the trialkylaluminum.

Nevertheless, the employment of the halogen-containing organic aluminum compound as a co-catalyst component is disadvantageous in that the resultant polymer has a relatively large content of residual halogen that causes an undesirable corrosion of a metallic mold when the polymer is molded. To inactivate the residual halogen in the polymer, it is necessary to add a relatively large amount of a deactivator to the polymer, and this addition results in increased production costs for the polymer, and thus is not economical.

Japanese Unexamined Patent Publication Nos. 50-50,489 and 56-18,607 disclose an alkylsiloxane compound usable as a co-catalyst component, instead of the halogen-containing organic aluminum compound. This alkylsiloxane compound is advantageous in that no hydrogenation of ethylene occurs and the resultant polymer is free from residual halogen derived from the co-catalyst component. Nevertheless, this alkylsiloxane compound is disadvantageous in that the compound is relatively expensive, and when used for a non-ash-removing polymerization method, the resultant polymer contained a certain amount of residual silicon.

## SUMMARY OF THE INVENTION

An object of the present invention is to provide a process for the polymerization of ethylene, optionally together with an $\alpha$-olefin, under high temperature and high pressure conditions, without the occurrence of an undesirable hydrogenation of ethylene.

Another object of the present invention is to provide a process for the polymerization of ethylene, optionally together with an $\alpha$-olefin, under high temperature and high pressure conditions, to provide an ethylene polymer resin containing a reduced residual halogen content.

The above-mentioned objects can be attained by the process of the present invention for the polymerization of ethylene, which comprises the steps of:

introducing a feed comprising a member selected from the group consisting of ethylene and mixture of ethylene with at least one $\alpha$-olefin having 3 or more carbon atoms, into a polymerization reactor; and

bringing the feed into contact with a catalyst comprising a catalyst solid component (A) comprising magnesium, titanium and a halogen and a catalyst component (B) comprising a reaction product of an organic aluminum compound of the formula (I):

$$AlR_3 \qquad (I)$$

wherein R represents an alkyl group having 1 to 8 carbon atoms, with a hindered phenol compound having at least one steric hindrance substituent group, at a temperature of 125°C or more under a pressure of 200 kg/cm$^2$ or more.

DESCRIPTION OF THE PREFERRED EMBODIMENTS

The catalyst usable for the present invention comprises a specific catalyst solid component (A) and a specific catalyst component (B).

The catalyst solid component (A) comprises magnesium, titanium and a halogen, for example, chlorine or bromine. The catalyst solid component (A) can be prepared by conventional methods, for example, as disclosed by Japanese Unexamined Patent Publication Nos. 56-55,405, 56-45,909, 56-163,102, 57-115,408, 57-141,408, 58-830,006 and 60-32,805.

For example, the catalyst solid component (A) may be a co-pulverization product of a mixture of a magnesium compound, for example, magnesium chloride, an electron-donating substance, for example, an ester, ether or alcohol, and titanium tetrachloride.

Alternatively, the catalyst solid composition (A) usable for the present invention is prepared by first reacting an aluminum halide with an organic silicon compound of the formula (II):

$$R^1_n Si(OR^2)_{4-n} \quad (I)$$

wherein $R^1$ represents a member selected from the group consisting of alkyl groups having 1 to 8 carbon atoms and a phenyl group, $R^2$ represents an alkyl group having 1 to 8 carbon atoms, and n represents an integer of 1 to 3, carrying out a second reaction of the resultant first reaction product with a Grignard compound of the formula (III):

$$R^3 MgX \quad (III)$$

wherein $R^3$ represents an alkyl group having 1 to 8 carbon atoms and X represents a halogen atom, and carrying out a third reaction of the resultant second reaction product with titanium tetrachloride.

The aluminum halide is preferably selected from aluminum chloride and aluminum bromide. The organic silicon compound of the formula (II) is preferably selected from methyltriethoxysilane, tetraethoxy silane, phenyltriethoxysilane and cyclohexyltriehoxysilane.

Also, the Grignard compound of the formula (III) is preferably selected from butyl magnesium chloride, phenylmagnesium chloride, isopropylmagnesium chloride and hexylmagnesium chloride.

Usually, the first reaction of the aluminum halide with the organic silicon compound of the formula (II) is carried out in an inert organic solvent selected from, for example, toluene, benzene and xylene, at a temperature of from -50 to 100°C.

The second reaction of the first reaction product with the Grignard compound of the formula (III) is preferably carried out by mixing the solution of the first reaction product with a solution of the Grignard compound in a solvent, for example, diisoamylether or diisopropyl ether, at a temperature of from -50°C to 100°C, to provide a precipitate.

In the third reaction, the second reaction precipitate is dispersed in a solvent, for example, toluene or xylene, titanium tetrachloride is added to the dispersion, and the resultant reaction mixture is heated at a temperature of from 0°C to 200°C, to provide the aimed catalyst solid component (A).

The catalyst component (B) usable for the present invention comprises a reaction product of an organic aluminum compound of the formula (I):

$$AlR_3 \quad (I)$$

wherein R represents an alkyl group having 1 to 8 carbon atoms, with a hindered phenol compound having at least one steric hindrance substituent group attached to a phenol structure.

The organic aluminum compound of the formula (I) is preferably selected from the group consisting of trimethyl aluminum, triethyl aluminum, tripropyl aluminum, tributylaluminum, trihexyl aluminum and trioctylaluminum.

The hindered phenol compound usable for the present invention is preferably selected from the group consisting of 2,6-di-tert-butyl-p-cresol, 4,4'-thiobis(3-methyl-6-tert-butylphenol), 4,4'-butylidenebis(3-methyl-6-tert-butylphenol), 2,2'-methylenebis(4-methyl-6-tert-butylphenol), butylhydroxyanisol-1,1,3-tris(2-methyl-4-hydroxy-5-tert-butyl-phenylbutane), 2,6-di-tert-butylphenol, 4,4'-methylenebis(2,6-di-tert-butyl-phenol), 2,2'-methylenebis(4-ethyl-6-tert-butylphenol), 2,5-di-tert-butyl-hydroquinone, 1,3,5-trimethyl-2,4,6-tris(3,5-di-tert-butyl-4-hydroxybenzyl) benzene, and tris(3,5-di-tert-butyl-4-hydroxyphenol)-isocyanurate.

The reaction product can be prepared by mixing the organic aluminum compound with the hindered phenol compound, in the presence or absence of an inert organic solvent. The reaction of the organic aluminum compound with the hindered phenol compound sometimes is exothermic, and thus the reaction mixture is cooled or heated, if necessary, to carry out the reaction preferably at a temperature of from -50°C to 200°C, more preferably from -10°C to 100°C.

Preferably, the hindered phenol compound is reacted with the organic aluminum compound in a molar ratio of from 0.5 to 1.5, more preferably from 0.8 to 1.1.

When the reaction product of the organic aluminum compound with the hindered phenol compound is prepared in an organic solvent, the solvent preferably comprises at least one member selected from the group consisting of pentane, hexane, heptane, octane, nonane, benzene, toluene, xylene and cyclohexane.

The hindered phenol compound is also effective as a stabilizing agent for enhancing the stability of polyolefin resins. Accordingly, the hindered phenol compound may be left in the resultant ethylene polymer as a residue derived from the catalyst component (B) used for the non-ash removing polymerization procedure.

In the catalyst usable for the present invention, the catalyst solid component (A) and the catalyst component (B) are contained preferably in an atomic ratio (Al/Ti) of aluminum in the component (B) to titanium in the component (B) of from 0.5 to 2000, more preferably from 1 to 500.

In the process of the present invention, the feed to be subjected to a polymerization procedure comprises a member selected from the group consisting of ethylene and mixtures of ethylene with at least one $\alpha$-olefin having 3 or more carbon atoms.

The $\alpha$-olefin is preferably selected from the group consisting of propylene, 1-butene, 1-hexene, 4-methylpentene-1 and 1-octene.

The feed is introduced into a polymerization reactor and brought into contact with the catalyst mentioned above at a temperature of from 125°C or more, preferably from 125°C to 300°C, more preferably from 125°C to 250°C, under a pressure of 200 kg/cm$^2$ or more, preferably from 200 to 3,000 kg/cm$^2$, more preferably from 200 to 2,000 kg/cm$^2$, to prepare a polyethylene or an ethylene-$\alpha$-olefin copolymer.

Preferably, the feed resides in the polymerization reactor for an average time of from 10 to 1,200 seconds, more preferably from 20 to 600 seconds.

There are no specific limitations of the type of polymerization reactor used but, for example, the polymerization reactor usable for the process of the present invention is preferably selected from tubular type polymerization reactors and autoclave type polymerization reactors usable for the preparation of low density polyethylene resins under a high pressure.

The molecular weight or degree of polymerization of the resultant polymer can be controlled by a customary addition of hydrogen to the polymerization system.

EXAMPLES

The present invention will be further explained by the following examples.

In the examples, the term "polymerization activity" of the catalyst is represented by a yield in kg of the resultant polymer over g of titanium contained in the catalyst solid component (A) of the catalyst employed.

Also, the term "MFR" refers to a melt flow index of the resultant polymer determined at a temperature of 190°C under a load of 2.16 kg, in accordance with ASTM 1234.

Example 1

A preparation of a catalyst solid component (A)

Aluminum chloride in an amount of 150 moles was mixed into 400 liters of toluene and 150 moles of methyltriethoxysilane were added dropwise to the mixture while stirring at room temperature. After the completion of the dropwise addition, the resultant reaction mixture was stirred at 25°C for 5 hours, to provide a uniform solution of the reaction product in toluene.

The solution gas cooled to a temperature of -10°C and 250 liters of a solution of 300 moles of butylmagnesium chloride in diisoamylether were added dropwise to the cooled solution at a temperature of from -10°C to 0°C. The reaction was exothermic and a white precipitate was produced in the reaction mixture. After the completion of the dropwise addition, the reaction system was further stirred at a temperature of -10°C for one hour, and the precipitate was separated from the reaction mixture by a filtration and washed with toluene and then with heptane.

The resultant solid powder was dispersed in 250 liters of toluene, and the resultant dispersion was supplemented with 1500 moles of titanium tetrachloride. The resultant mixture was subjected to a reaction at a temperature of 90°C for 3 hours, the reaction mixture then filtered, and the filtered solid substance washed with toluene.

Again, the solid substance was dispersed in 250 liters of toluene, and 1500 moles of titanium tetrachloride were added to the dispersion. The resultant reaction mixture was subjected to a reaction at a temperature of 90°C for 3 hours, and then filtered. The filtered solid product was washed with toluene and then with heptane.

A catalyst solid component (A) was obtained, and after drying, it was found that the catalyst solid component (A) contained titanium in an amount of 4.2% by weight.

The catalyst solid component (A) in an amount of 26 kg was dispersed in 1720 liters of mineral oil to provide a mineral oil slurry of the catalyst solid component (A).

Preparation of a catalyst component (B)

A reaction mixture was prepared by adding 330 liters of a solution of 50% by weight of 2,6-di-tert-butyl-p-cresol in mineral oil to 150 liters of a solution of 50% by weight of triethylaluminum in mineral oil while cooling the mixture to an extent such that the reaction temperature of the mixture did not exceed a level of 30°C. The molar ratio of triethyl aluminum to 2,6-di-tert-butyl-p-cresol was 1.0. After the mixing operation of the above-mentioned two solutions was completed, the reaction mixture was subjected to a reaction at a temperature of from 40°C to 50°C, for about 2 hours.

A mineral oil solution of the catalyst component (B) was obtained.

Polymerization of ethylene and 1-butene

A feed comprising a mixed monomer gas consisting of 62 molar% of ethylene and 38 molar% of 1-butene and hydrogen in an amount of 0.2 molar% based on the total molar amount of the mixed monomer gas was continuously fed into a tubular type polymerization reactor having a total length of 400 m, under a constant pressure of 1500 kg/cm$^2$.

The mineral oil slurry of the catalyst solid component (A) and the mineral oil solution of the catalyst component (B) were continuously introduced into the polymerization reactor through inlets therefor, at feeding rates of 14.5 liters/hour and 4.2 liters/hour, respectively, to thereby cause the feed to be brought into contact with the resultant catalyst in the polymerization reactor. In the resultant catalyst, the atomic ratio (Al/Ti) of aluminum in the component (B) to titanium in the component (A) was controlled to a level of 10. Also, the temperature inside the polymerization reactor was controlled to a level of 140°C at the outlet of the feed and the highest temperature thereof was 250°C.

The polymerization procedure was continuously carried out for 5 hours.

It was confirmed that a production of ethane was not observed during the polymerization procedure.

The results of the polymerization are shown in Table 1.

Examples 2 to 4

In each of Examples 2 to 4, the same procedures as in Example 1 were carried out except that, in the preparation of the catalyst component (B) solution, the 2,6-di-tert-butyl-p-cresol was replaced by 2,6-di-tert-butylphenol in Example 2, by 4,4'-methylenebis(2,6-di-tert-butylphenol) in Example 3 and by 1,3,5-trimethyl-2,4,6-tris(3,5-di-tert-butyl-4-hydroxybenzyl)-benzene in Example 4.

The polymerization results are shown in Table 2.

Example 5

Aluminum chloride in an amount of 150 moles was mixed into 400 liters of toluene and 150 moles of tetraethoxysilane were added dropwise to the mixture while stirring at room temperature. After the completion of the dropwise addition, the resultant reaction mixture was stirred at 25°C for 5 hours to provide a uniform solution of the reaction product in toluene.

The solution was cooled to a temperature of -10°C and 250 liters of a solution of 300 moles of butylmagnesium chloride in diisoamylether were added dropwise to the cooled solution at a temperature of from -10°C to 0°C. The reaction was exothermic and a white precipitate was produced in the reaction mixture. After the completion of the dropwise addition, the reaction system was further stirred at a temperature of -10°C for one hour, and the precipitate was separated from the reaction mixture by filtration and washed with toluene and then with heptane.

The resultant solid powder was dispersed in 250 liters of toluene, and the resultant dispersion was supplemented with 1500 moles of titanium tetrachloride. The resultant mixture was subjected to a reaction at a temperature of 90°C for 3 hours, the reaction mixture then filtered, and the filtered solid substance washed with toluene and then heptane.

A catalyst solid component (A) was obtained, and after drying, it was found that the catalyst solid component (A) contained titanium in an amount of 4.8% by weight.

The catalyst solid component (A) in an amount of 26 kg was dispersed in 1850 liters of mineral oil to provide a mineral oil slurry of the catalyst solid component (A).

Preparation of a catalyst component (B)

The same procedures as in Example 1 were carried out, to provide a solution of a catalyst component (B) in mineral oil.

Polymerization of ethylene and 1-butene

A feed comprising a mixed monomer gas consisting of 62 molar% of ethylene and 38 molar% of 1-butene and hydrogen in an amount of 0.2 molar% based on the total molar amount of the mixed monomer gas was continuously fed into a tubular type polymerization reactor having a total length of 400 m, under a constant pressure of 1500 kg/cm$^2$.

The mineral oil slurry of the catalyst solid component (A) and he mineral oil solution of the catalyst component (B) were continuously introduced into the polymerization reactor through inlets therefor, at feeding rates of 14.5 liters/hour and 6.3 liters/hour, respectively, to thereby cause the feed to be brought into contact with the resultant catalyst in the polymerization reactor. In the resultant catalyst, the atomic ratio (Al/Ti) of aluminum in the component (B) to titanium in the component (A) was controlled to a level of 15. Also, the temperature inside the polymerization reactor was controlled to a level of 140°C at the outlet of the feed and the highest temperature thereof was 250°C.

The polymerization procedure was continuously carried out for 5 hours.

It was confirmed that a production of ethane was not observed during the polymerization procedure.

The results of the polymerization are shown in Table 1.

Example 6

The same procedures as described in Example 1 were carried out, except that the triethyl aluminum was replaced by trimethyl aluminum.

The results of the copolymerization of ethylene with 1-butene are indicated in Table 1.

Example 7

The same procedures as in Example 1 were carried out, except that 4-methylpentene-1 was used instead of 1-butene.

The results of the copolymerization of ethylene with 4-methylpentene 1 are shown in Table 1.

Example 8

The same procedures as in Example 2 were carried out, except that the molar ratio of ethylene to 1-butene in the feed was changed from 62/38 to 35/65.

The copolymerization results are shown in Table 1.

Example 9

The same procedures as in Example 1 were carried out, except that the catalyst solid component (A) was prepared in the following manner.

Preparation of catalyst solid component (A)

Stainless steel balls having a diameter of 1.2 cm and in an amount of 9 kg were placed in the inside of a stainless steel pot having a capacity of 4 liters, and the inside space of the pot was filled by nitrogen gas.

Then, this vibration ball mill was charged with 400 g of magnesium chloride and 90 ml of ethyl benzoate, and the charged mixture was pulverized in the vibration ball mill for 5 hours.

The pulverization product in an amount of 400 g was subjected to a reaction with 1500 ml of titanium tetrachloride at a temperature of 90°C for 2 hours, and the reaction product was heat-filtered.

The resultant solid product treated with titanium tetrachloride was washed with 1000 liters of n-heptane five times, and a catalyst solid component (A) was obtained.

After drying, the resultant catalyst solid component (A) was found to contain titanium in a content of 2.3% by weight.

The catalyst solid component (A) in an amount of 1 kg was dispersed in 36.2 liters of mineral oil to provide a mineral oil slurry of the catalyst solid component (A).

The same procedures as in Example 1 were carried out for the preparation of the catalyst component (B) and for the copolymerization of ethylene with 1-butene.

The results are shown in Table 1.

Comparative Example 1

The same procedures as in Example 1 were carried out, except that the catalyst component (B) was composed of diethylaluminum chloride alone.

The results of the copolymerization of ethylene with 1-butene are shown in Table 1.

Table 1

| Item<br>Example No. | Polymeri-zation activity (kg/gTi) | MFR of polymer (g/10 min) | Density of polymer (g/cm$^3$) | Content of chlorine in polymer (ppm) |
|---|---|---|---|---|
| Example 1 | 260 | 5 | 0.923 | 61 |
| 2 | 280 | 5 | 0.922 | 58 |
| 3 | 280 | 7 | 0.922 | 60 |
| 4 | 265 | 12 | 0.920 | 62 |
| 5 | 290 | 9 | 0.921 | 56 |
| 6 | 280 | 10 | 0.922 | 58 |
| 7 | 210 | 10 | 0.900 | 75 |
| 8 | 280 | 8 | 0.903 | 57 |
| 9 | 270 | 6 | 0.923 | 56 |
| Comparative Example 1 | 280 | 10 | 0.920 | 130 |

Table 1 shows that the catalysts of Examples 1 to 9 had a satisfactory polymerization activity, and the resultant polymers of Examples 1 to 9 had a significantly reduced content of chlorine in comparison with that of Comparative Example 1.

**Claims**

7

1. A process for the polymerization of ethylene, comprising the steps of:

   introducing a feed comprising a member selected from the group consisting of ethylene and mixtures of ethylene with at least one $\alpha$-olefin having 3 or more carbon atoms, into a polymerisation reactor; and

   bringing the feed into contact with a catalyst comprising a catalyst solid component (A) comprising magnesium, titanium and a halogen and a catalyst component (B) comprising a reaction product of an organic aluminum compound of the formula (I):

   $AlR_3$     (I)

   wherein R represents an alkyl group having 1 to 8 carbon atoms, with a hindered phenol compound having at least one steric hindrance substituent group, at a temperature of 125°C or more under a pressure of 200 kg/cm$^2$ or more.

2. The process as claimed in claim 1, wherein the catalyst solid component (A) is a pulverization product of a mixture of a magnesium compound with an electron-donating substance and titanium tetrachloride.

3. The process as claimed in claim 1, wherein the catalyst solid component (A) is prepared by first reacting an aluminum halide with an organic silicon compound of the formula (II):

   $R^1{}_nSi(OR^2)_{4-n}$     (II)

   wherein $R^1$ represents a member selected from the group consisting of alkyl groups having 1 to 8 carbon atoms and a phenyl group, $R^2$ represents an alkyl group having 1 to 8 carbon atoms, and n represents an integer of 1 to 3, carrying out a second reaction of the resultant first reaction product with a Grignard compound of the formula (III):

   $R^3MgX$     (III)

   wherein $R^3$ represents an alkyl group having 1 to 8 carbon atoms and X represents a halogen atom, and carrying out a third reaction of the resultant second reaction product with titanium tetrachloride.

4. The process as claimed in claim 1, wherein the hindered phenol compound is selected from the group consisting of 2,6-di-tert-butyl-p-cresol, 4,4'-thiobis(3-methyl-6-tert-butylphenol), 4,4'-butylidenebis(3-methyl-6-tert-butylphenol), 2,2'-methylenebis(4-methyl-6-tert-butylphenol), butylhydroxyanisol-1,1,3-tris-(2-methyl-4-hydroxy-5-tert-butylphenylbutane), 2,6-di-tert-butylphenol, 4,4'-methylenebis(2,6-di-tert-butyl-phenol), 2,2'-methylenebis(4-ethyl-6-tert-butylphenol), 2,5-di-tert-butyl-hydroquinone, 1,3,5-trimethyl-2,4,6-tris(3,5-di-tert-butyl-4-hydroxybenzyl) benzene, and tris(3,5-di-tert-butyl-4-hydroxyphenol)-isocyanurate.

5. The process as claimed in claim 1, wherein the organic aluminum compound of the formula (I) is selected from the group consisting of trimethyl aluminum, triethyl aluminum, tripropyl aluminum, tributylaluminum, trihexyl aluminum and trioctyl aluminum.

6. The process as claimed in claim 1, wherein the molar ratio of the hindered phenol compound to the organic aluminum compound in the preparation of the reaction product is from 0.5 to 1.5.

7. The process as claimed in claim 1, wherein the catalyst has an atomic ratio of Al/Ti of aluminum of the component (B) to titanium of the component (A) of 0.5 to 2,000.

8. The process as claimed in claim 1, wherein the $\alpha$-olefin is selected from the group consisting of propylene, 1-butene, 1-hexene, 4-methylpentene-1 and 1-octene.

9. The process as claimed in claim 1, wherein the feed resides in the polymerization reactor for an average time of from 10 to 1,200 seconds.